(19)

Europäisches
Patentamt
European
Patent Office
Office européen
des brevets

(11) **EP 3 244 408 A1**

(12) **EUROPEAN PATENT APPLICATION**

(43) Date of publication:
**15.11.2017 Bulletin 2017/46**

(51) Int Cl.:
***G10L 21/043*** (2013.01)

(21) Application number: **16168726.4**

(22) Date of filing: **09.05.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Sony Mobile Communications, Inc
Tokyo 140-0002 (JP)**

(72) Inventor: **THÖRN, Ola
21612 LIMHAMN (SE)**

(74) Representative: **Neij & Lindberg AB
Pedellgatan 11
224 60 Lund (SE)**

(54) **METHOD AND ELECTRONIC UNIT FOR ADJUSTING PLAYBACK SPEED OF MEDIA FILES**

(57)     A method for adjusting speed of playback of a media file is disclosed comprising generating an associate text file by speech-to-text conversion of the media, calculating the number of i.e. words per time unit, determining the degree of comprehensibility of the media file and adjusting a current speed of playback of the media file to a pre-set speed of playback based on calculated number of words per time unit and the determined degree of comprehensibility.

FIG 1

**Description**

TECHNICAL FIELD

The present disclosure relates generally to media players that play media data. More specifically, the disclosure relates to method and unit for adjusting playback speed of media data.

BACKGROUND ART

Media players exist with features that allow for playback of a media file at a rate that is faster than the normal rate. This permits the user to listen or watch podcast shows, media file, over a shorter period of time.
A common feature in media player apps is to be able to control the playback speed e.g. x1, x1.1, x1.2 etc. This feature helps the user to change the playback speed depending on the media file, category of content or specific show. Current podcasting apps allow the user to set the playback speed manually for each show and since a host may vary the speed they talk, word per minute (wpm), it is difficult to set the right playback speed. Furthermore, a guest may be on the show, talking at another speed and suddenly the set playback speed is not comprehensible to the listener.

SUMMARY OF THE INVENTION

With the above description in mind, then, an aspect of some embodiments of the present invention is to provide a method and unit for adjusting speed of playback of a media file, which seeks to mitigate, alleviate or eliminate one or more of the above-identified deficiencies in the art and disadvantages singly or in any combination.
The present disclosure is defined by the appended claims. Various advantageous embodiments of the disclosure are set for the by the appended claims as well as by the following description and accompanying drawings.
An aspect of the present invention relates to a method for adjusting speed of playback of a media file. The method comprising generating an associate text file by speech-to-text conversion of the media, associating a time stamp for each elements of speech of the generated text file, calculating the number of elements of speech per time unit by using the associated time stamp, determining the degree of comprehensibility of the media file by means of determining characteristic parameters of the media file and adjusting a current speed of playback of the media file to a pre-set speed of playback based on calculated number of elements of speech per time unit and the determined degree of comprehensibility.
An aspect of the present invention relates to an electronic unit for adjusting speed of playback of a media file. The electronic unit comprises a processing circuitry configured to generate an associate text file by using speech-to-text conversion of the media file, to associate a time stamp for each elements of speech of the generated text file, to calculate the number of elements of speech per time unit by using the associated time stamp, to determine the degree of comprehensibility of the media file by means of determine characteristic parameters of the media file and to adjust a current speed of playback of the media file to a pre-set speed of playback based on calculated number of elements of speech per time unit and the determined degree of comprehensibility.
The playback speed of a media file may be adjusted depending of the character of the content of the media file, thus the user gets the experience that all media files a played in a good continuous tempo.
An aspect of the present invention relates to a computer readable program, which, when executed on a communication device, causes the communication device to perform the method as described above.
It is an advantage with some embodiments of the invention that they may allow for improving that the user or listener captures all of the content of the media file.
The features of the above-mentioned embodiments can be combined in any combinations.

BRIEF DESCRIPTION OF THE DRAWINGS

Further objects, features and advantages of the present invention will appear from the following detailed description of the invention, wherein embodiments of the invention will be described in more detail with reference to the accompanying drawings, in which:

FIG. 1 is a flowchart illustrating the method according to the present invention.

FIG. 2 illustrates an example of an electronic unit according to the present invention.

DETAILED DESCRIPTION

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise.

It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Embodiments of the present invention will be exemplified using a wireless communication device such as a mobile phone. However, it should be appreciated that the invention is as such equally applicable to any device which have a media player. Examples of such devices may for instance be any type of mobile phone, smartphone, laptop (such as standard, ultra-portables, netbooks and micro laptops), handheld computers, tablet computers, touch pads, gaming devices, watches, wearables.

Unless otherwise defined, all terms (including and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

This invention proposes a method using a speech-to-text algorithm to calculate elements of speech, e.g. words, per time unit to set a global playback speed of a media file, e.g. a podcast. This will give the user an experience that all media files are played back in a good continuous speed. No matter on which media file, topic or how fast they speak in the show and the user only needs to set the speed of playback once.

In other embodiments variable depending on how difficult the content is to comprehend, e.g. due to wordings, topics, language, speaker, dialect.

In other embodiments, the speed of playback is mapped towards e.g. recording quality, language and dialect so that the speed of playback automatically changes e.g. depending on if it are difficult to hear.

As an example, podcast show A has a host that speaks really "slooooowllllyyyy" and show B has a host that speaks "really fast". The speed for each show may be adjusted and thereby improving that the user or listener capture all of the content.

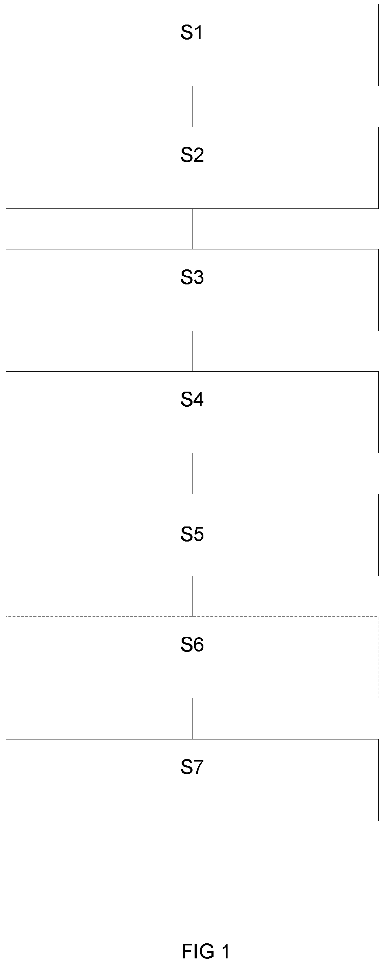

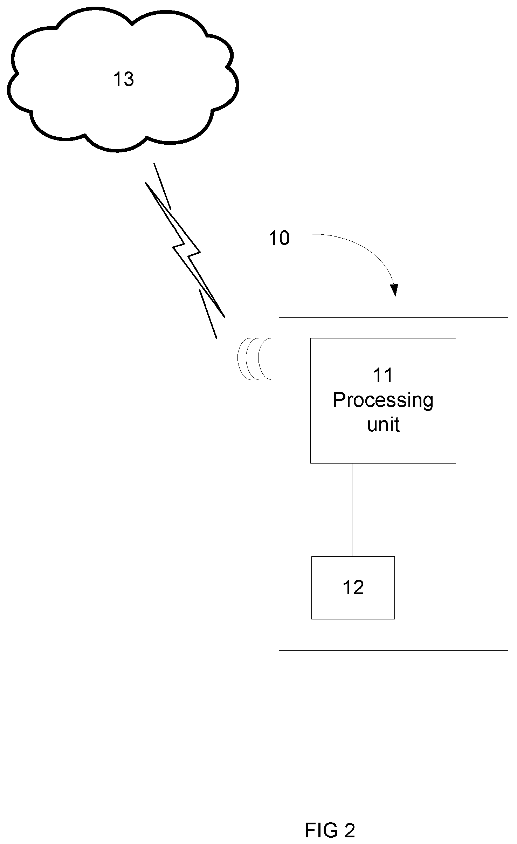

Figure 1 is flow diagram depicting example operations which may be taken by an electronic unit 10 of figure 2 comprising a processing circuitry 11. The media file is stored in an internal storage 12 of the electronic unit 10 or in an external storage 13, e.g. cloud storage.

According to some aspects, the method for adjusting speed of playback of a media file, comprises generating S1 an associate text file by a speech-to-text conversion of the media file. According to some aspects, the processing circuitry 11 is configured to generate the associated text file by the speech-to-text conversion of the media file. As an example, the media file is a podcast and an associated text file is generated by converting the podcast to text by using a speech-to-text service, e.g. IBM, Watson, cloud based or performed in an electronic device. The media file may also be any of a clean audio file or a video file.

The method further comprises associating S2 a time stamp for each elements of speech of the generated text file and calculating S3 the number of elements of speech per time unit by using the associated time stamp, i.e. the current speed of speech is calculated. The method further comprises determining S4 the degree of comprehensibility of the media file by means of determining S5 characteristic parameters of the media file. The method also comprises adjusting S7 a current speed of playback of the media file to a pre-set speed of playback based on calculated number of elements of speech per time unit and the determined degree of comprehensibility. In some aspects the processing circuitry 11 is configured to associate the time stamp for each elements of speech of the generated text file, calculate the number of elements of speech per time unit by using the associated time stamp, determine the degree of comprehensibility of the media file by means of determine characteristic parameters of the media file and adjust a current speed of playback of the media file to a pre-set speed of playback based on calculated number of elements of speech per time unit and the determined degree of comprehensibility.

According to some aspects, the method further comprises identifying S6 parts of the generated text file where the degree of comprehensibility differs and adjusting S7 a current speed of playback of the identified parts of the media file to a pre-set speed of playback based on the calculated number of elements of speech per time unit and the determined degree of comprehensibility. In some aspects, the processing circuitry 11 is further configured to identify parts of the generated text file where the degree of comprehensibility differs and to adjust the current speed of playback of the identified parts of the media file to a pre-set speed of playback based on the calculated number of elements of speech per time unit and the determined degree of comprehensibility.

According to some aspects, the adjusting S7 of speed of playback is performed continuously and/or automatically.

According to some aspects the elements of speech is any of a syllable, words, characters or part of words.

According to some aspects the parameter comprises at least one of readability level, readability score, language, dialect, topic and/or speaker. According to some aspects, the readability score further comprises determining at least one of number of sentence, number of long words, length of sentences and word frequency.

There is several known readability measure or score that may be used to indicate the difficulty of reading a text. One example is LIX, which is a readability measure developed by a Swedish scholar. It is computed as follows:

$$LIX = A/B + (C*100)/A$$

A is the number of words, B is the number of periods, defined by period, colon or capital first letter and C is the number of long words, more than 6 letters.

Another example is automated readability index, ARI, which is a readability test for English texts, Flesch-Kincaid grade level, Gunning fog index, SMOG index, Fry readability formula and Cole-Liau index. The formula for calculating the automated readability index is given below:

$$ARI = 4,71 \, (characters/words) + 0,5(words/sentences) - 21.43$$

Measure or score of readability may also be based on the topics of media file, e.g. news, technical, novels, the language spoken in the media file, e.g. English, Swedish, Chinese, or the dialect of the language spoken in the media file.

The speed of playback of the media file, e.g. podcast, is then set based on the score of readability. As an example, if the text is defined as difficult the speed of playback is set to a predetermined speed, Speed 1. If the text is defined as easy the speed of playback is to another predetermined speed, Speed 2. Thus, the user or listener will get the experience that all media files, such as podcasts, are played back in a good continuous tempo. No matter on which media file, which topic or how fast they speak in the media file. The user only needs to set the tempo once.

The various aspects of the disclosure described herein are described in the general context of method steps or processes, which may be implemented according to some aspects by a computer readable program, comprising computer readable code which, when run on a communication device, causes the communication device to perform the one or several of the methods according to above. The computer program, embodied in a computer-readable medium, includes computer-executable instructions, such as program code, executed by computers in networked environments. A computer-readable medium may include removable and non-removable storage devices 5 including, but not limited to, Read Only Memory, ROM, Random Access Memory, RAM, compact discs, CDs, digital versatile discs, DVD, etc. Generally, program modules may include routines, programs, objects, components, data structures, etc. that performs particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

As used herein, the term "communication device" includes a mobile phone (or as a mobile telephone, portable phone or portable telephone), a portable device, a portable radio terminal or a portable terminal, includes all electronic equipment, including, but not limited to, capable of being used for voice and/or data communication.

As will be appreciated, the invention may be used with mobile phones, other phones, smartphones, personal digital assistants (PDAs), computers, other communication devices, etc., for brevity, the invention will be described by way of examples with respect to mobile phones, but it will be appreciated that the invention may be used with other communication devices.

It should be appreciated that the operations, shown in figure 1, need not be performed in order. Furthermore, it should be appreciated that not all of the operations need to be performed.

The description of the aspects of the disclosure provided herein has been presented for purposes of illustration. The description is not intended to be exhaustive or to limit aspects of the disclosure to the precise form disclosed, and modifications and variations are possible in light of the above teachings or may be acquired from practice of various alternatives to the provided aspects of the disclosure. The examples discussed herein were chosen and described in order to explain the principles and the nature of various aspects of the disclosure and its practical application to enable one skilled in the art to utilize the aspects of the disclosure in various manners and with various modifications as are suited to the particular use contemplated. The features of the aspects of the disclosure described herein may be combined in all possible combinations of methods, apparatus, modules, systems, and computer program products. It should be appreciated that the aspects of the disclosure presented herein may be practiced in any combination with each other.

It should be noted that the word "comprising" does not necessarily exclude the presence of other elements or steps than those listed. It should further be noted that any reference signs do not limit the scope of the claims, that the aspects of the disclosure may be implemented at least in part by means of both hardware and software, and that several "means" or "devices" may be represented by the same item of hardware.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

**Claims**

1. A method for adjusting speed of playback of a media file, wherein the method comprising:

   • generating (S1) an associate text file by speech-to-text conversion of the media file;
   • associating (S2) a time stamp for each elements of speech of the generated text file;
   • calculating (S3) the number of elements of speech per time unit by using the associated time stamp;
   • determining (S4) the degree of comprehensibility of the media file by means of determining (S5) characteristic parameters of the media file; and
   • adjusting (S7) a current speed of playback of the media file to a pre-set speed of playback based on calculated number of elements of speech per time unit and the determined degree of comprehensibility.

2. The method according to claim 1, wherein the elements of speech is any of syllables, words, characters or part of words.

3. Method according to claim 1, wherein the parameter comprises at least one of readability level, readability score, language, dialect, topic and/or speaker.

4. Method according to claim 3, wherein the readability score further comprises determining at least one of number of sentence, number of long words, length of sentences and word frequency.

5. Method according to any of the preceding claims, wherein the method further comprising:

   • identifying (S6) parts of the generated text file where the degree of comprehensibility differs; and
   • adjusting (S7) a current speed of playback of the identified parts of the media file to a pre-set speed of playback based on the calculated number of elements of speech per time unit and the determined degree of comprehensibility.

6. Method according to any of the preceding claims, wherein the adjusting (S7) of current speed of playback is performed continuously and/or automatically.

7. An electronic unit (10) for adjusting speed of playback of a media file comprising a processing circuitry (11) configured to:

   • generate an associated text file by speech-to-text conversion of the media file;
   • associate a time stamp for each elements of speech of the generated text file;
   • calculate the number of elements of speech per time unit by using the associated time stamp;
   • determine the degree of comprehensibility of the media file by means of determine characteristic parameters of the media file; and
   • adjust a current speed of playback of the media file to a pre-set speed of playback based on calculated number of elements of speech per time unit and the determined degree of comprehensibility.

8. The electronic unit (10) according to claim 7, wherein the elements of speech is any of syllables, words, characters or part of words.

9. The electronic unit (10) according to claim 7, wherein parameter comprises at least one of readability level, readability score, language, dialect, topic and/or speaker.

10. The electronic unit (10) according to claim 9, wherein the readability score further comprises determining at least one of number of sentence, number of long words, length of sentences and word frequency.

11. The electronic unit (10) according to any of the preceding claims, wherein the processing circuitry (11) is further configured to:

   • identify parts of the generated text file where the degree of comprehensibility differs; and
   • adjust the current speed of playback of the identified parts of the media file to a pre-set speed of playback based on the calculated number of elements of speech per time unit and the determined degree of comprehensibility.

12. The electronic unit (10) according to any of claim 7-11, wherein the adjusting of the current speed of playback is performed continuously and automatically.

13. A computer readable program, which, when executed on a communication device, causes the communication device to perform the method according to claim 1 to 6.

S1

S2

S3

S4

S5

S6

S7

FIG 1

13

10

11
Processing
unit

12

FIG 2

Europäisches
Patentamt

European
Patent Office

Office européen
des brevets

# EUROPEAN SEARCH REPORT

Application Number

EP 16 16 8726

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 552 109 A1 (COMCAST CABLE COMM LLC [US]) 30 January 2013 (2013-01-30)<br>* paragraph [0042] - paragraph [0049] *<br>* paragraph [0051] - paragraph [0054] *<br>* paragraph [0057] - paragraph [0058] *<br>* paragraph [0064] - paragraph [0065] *<br>----- | 1-13 | INV.<br>G10L21/043 |
| X | US 5 828 994 A (COVELL MICHELE [US] ET AL) 27 October 1998 (1998-10-27)<br>* column 4, line 55 - column 5, line 67 *<br>* column 9, line 44 - line 48 *<br>* figure 3 *<br>----- | 1-13 | |
| X | WO 2009/104613 A1 (NEC CORP [JP]; KONDO REISHI [JP]; MITSUI YASUYUKI [JP]) 27 August 2009 (2009-08-27)<br>* claims 1,2,7,8 *<br>* figures 5,7 *<br>----- | 1-13 | |
| X | EP 2 916 317 A1 (NEC CORP [JP]) 9 September 2015 (2015-09-09)<br>* paragraph [0069] - paragraph [0071] *<br>* paragraph [0087] - paragraph [0091] *<br>* paragraph [0102] - paragraph [0129] *<br>* paragraph [0138] *<br>----- | 1-13 | TECHNICAL FIELDS SEARCHED (IPC)<br><br>G10L |
| X | EP 2 388 780 A1 (FRAUNHOFER GES FORSCHUNG [DE]) 23 November 2011 (2011-11-23)<br>* claims 1-8 *<br>* paragraphs [0010], [0011], [0015] - [0019], [0028], [0029], [0042], [0043], [0044], [0048], [0049], [0050] *<br>----- | 1-13 | |
| A | US 2014/141392 A1 (YOON SU-YOUN [US] ET AL) 22 May 2014 (2014-05-22)<br>* claims 1-17; figures 2,3 *<br>----- | 1-4,7-10 | |

The present search report has been drawn up for all claims

| Place of search | Date of completion of the search | Examiner |
|---|---|---|
| The Hague | 19 October 2016 | Deltorn, Jean-Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 16 16 8726

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2016

| Patent document cited in search report | | Publication date | Patent family member(s) | | Publication date |
|---|---|---|---|---|---|
| EP 2552109 | A1 | 30-01-2013 | CA 2783852 A1<br>EP 2552109 A1<br>US 2013031266 A1<br>US 2015043896 A1<br>US 2016210997 A1 | | 29-01-2013<br>30-01-2013<br>31-01-2013<br>12-02-2015<br>21-07-2016 |
| US 5828994 | A | 27-10-1998 | AU 719955 B2<br>AU 2829497 A<br>CA 2257298 A1<br>EP 0978119 A1<br>JP 2000511651 A<br>US 5828994 A<br>WO 9746999 A1 | | 18-05-2000<br>05-01-1998<br>11-12-1997<br>09-02-2000<br>05-09-2000<br>27-10-1998<br>11-12-1997 |
| WO 2009104613 | A1 | 27-08-2009 | JP 5521554 B2<br>WO 2009104613 A1 | | 18-06-2014<br>27-08-2009 |
| EP 2916317 | A1 | 09-09-2015 | CN 104756181 A<br>EP 2916317 A1<br>JP WO2014069220 A1<br>US 2015243294 A1<br>WO 2014069220 A1 | | 01-07-2015<br>09-09-2015<br>08-09-2016<br>27-08-2015<br>08-05-2014 |
| EP 2388780 | A1 | 23-11-2011 | AR 081014 A1<br>EP 2388780 A1<br>TW 201207847 A<br>WO 2011144617 A1 | | 30-05-2012<br>23-11-2011<br>16-02-2012<br>24-11-2011 |
| US 2014141392 | A1 | 22-05-2014 | NONE | | |

EPO FORM P0459

For more details about this annex : see Official Journal of the European Patent Office, No. 12/82